# EUROPEAN PATENT SPECIFICATION

(11) **EP 1 628 540 B1**
(45) Date of publication and mention of the grant of the patent: **13.08.2008**
(21) Application number: 04735445.1
(22) Date of filing: 29.05.2004
(51) Int. Cl.: A23G 1/00, A23G 1/36

(54) **METHOD OF PRODUCING CHOCOLATE ADDING A CARBOXYLIC ACID ESTER OF A DIGLYCERIDE TO A CHOCOLATE MASS, AND A CHOCOLATE COMPOSITION PRODUCED BY SAID METHOD**
VERFAHREN ZUR HERSTELLUNG VON SCHOKOLADE, BEI DEM MAN EINE SCHOKOLADENMASSE MIT EINEM CARBONSÄUREESTER EINES DIGLYCERIDS VERSETZT, SOWIE NACH DIESEM VERFAHREN HERGESTELLTES SCHOKOLADENPRODUKT
PROCEDE PERMETTANT DE PRODUIRE DU CHOCOLAT EN AJOUTANT UN ESTER D'ACIDE CARBOXYLIQUE D'UN DIGLYCERIDE A UNE MASSE DE CHOCOLAT ET UNE COMPOSITION DE CHOCOLAT OBTENUE A L'AIDE DE CE PROCEDE

(30) Priority: 04.06.2003 DK 200300831; 05.06.2003 US 453732 P
(43) Date of publication of application: 01.03.2006
(73) Proprietor: Palsgaard A/S, 7130 Juelsminde (DK)
(72) Inventor: NORN, Viggo, Creemers, DK-7140 Stouby (DK); CHRISTIANSEN, Kim, DK-8700 Horsens (DK)
(74) Representative: Plougmann & Vingtoft A/S
(86) International application number: PCT/DK2004/000377
(87) International publication number: WO 2004/107871

(56) References cited:
- WO-A-99/45790
- DK-B- 174 644
- US-A- 4 587 130
- US-A- 5 124 166
- US-A- 5 464 649

## Description

### FIELD OF THE INVENTION

The present invention relates to a method of producing chocolate. The method comprising adding a chocolate emulsifying agent comprising at least 10% wt. of a hydroxy carboxylic acid ester of a diglyceride to a chocolate mass, the hydroxy carboxylic acid not being tartaric acid. The invention also provides a chocolate composition comprising a chocolate emulsifying agent comprising at least 10% wt. of a hydroxy carboxylic acid ester of a diglyceride, the hydroxy carboxylic acid not being tartaric acid. In particular, the hydroxy carboxylic acid ester of a diglyceride in the present invention is a citric acid ester of a diglyceride, preferably added to the chocolate mass before or during conching.

### BACKGROUND OF THE INVENTION

Interface active substances, known as emulsifiers, are used in the food industry to ensure the right suspension of one phase in another, as in the mixture of oil and water. The amphiphilic character of interface active substances allows more or less hydrophobic substances to be suspended with more or less hydrophilic substances. Thereby, interface active substances contribute to more appetising food qualities by improving appearance and consistency.

Emulsifiers are also used in the chocolate industry as additives in the production of chocolate to improve the appearance and consistency of chocolate products. The appearance and consistency are in the same way improved when using emulsifiers in chocolate imitations, so called compounds.

An important aspect in the production of chocolate is flow properties of the melted chocolate mass. To get an optimal product it is of great importance to be able to regulate the flow properties of the chocolate mass. The flow properties are also important for later applications of the chocolate mass, such as in use as couverture, enrobing fillings, nuts, moulding, etc,

The flow properties of a chocolate mass are characterised by the plastic viscosity and the yield value. The yield value is related to the force to start the flow of the chocolate, and the plastic viscosity is related to the work that is required to keep the chocolate flowing. Chocolate is pseudo plastic in that the apparent viscosity decreases when the shearing stress is increased. Chocolate has a positive yield value, which means that an initial amount of energy is required to start flow of the chocolate.

Substances such as soy lecithin, ammonium phosphatide and PGPR (polyglycerol polyricinoleate) are generally used within the chocolate and candy industry to adjust the flow properties of chocolate.

Soy lecithin and other vegetable lecithin's are glycerol phospholipids, a group of substances coming out as by-products from the refining of vegetable oils. In general, the biggest fractions of glycerol phospholipids are characterised by its chemical structure as being glycerol esterified in the 1-position and in the 2-position with fatty acids, while the 3-position is esterified with a group of phosphate.

Lecithin is effective in improving the flow properties of chocolate and is widely used for commercial benefit as a partial cocoa butter replacer. It has been reported that the addition of 0.1-0.3% soy lecithin reduces the viscosity by more than 10 times its own weight of cocoa butter.

In the chocolate industry there is a long felt need for a substitute to soy lecithin. Soy lecithin is characterised by an intense taste and smell of soy. Especially during storage, soy lecithin gives the chocolate a bad taste. Also, lecithin is frequently based on GMO soy, which at the moment is not allowed in all countries. The effect by adding lecithin is a reduction of the viscosity with increasing addition up to 0,7% wt. after which addition of lecithin gives a negative effect on viscosity. Lecithin does generally not influence and thus reduce the yield value, which may be a drawback using lecithin.

Thus, alternative emulsifying agents have been introduced to overcome the problems involved by using lecithin.

One such alternative emulsifier is described in the European patent application, EP 1069831 A1, in which a low fat chocolate and a low fat chocolate product is prepared. The main focus is to improve the emulsification of the chocolate to achieve better plastic viscosity and yield value. Among the emulsifiers used to obtain the effect is lecithin and diacetyl tartaric esters of mono- and diglycerides.

Another European patent, EP 0667746 B1, describes a chocolate composition with a low fat content and a process to prepare the composition. The composition comprises at the most 1% of an emulsifier to improve the flow properties of the chocolate. Applicable emulsifiers are mono- and diglycerides, lecithin and also diacetyl tartaric esters of mono- and diglycerides.

The Danish patent application, DK A 9700390, describes the application of a citric acid ester of a monoglyceride as viscosity regulating emulsifier in chocolate. In the examples it is described that the citric acid ester is added to a compound, a vecao, and the plastic viscosity and the yield value are determined versus a soy lecithin reference.

Surprisingly, using a citric acid ester of a diglyceride in the present invention has turned out to be considerably more effective than conventional emulsifiers described in the art.

Furthermore, by using mixtures of citric acid esters of diglycerides and monoglycerides, an additionally improvement has been achieved with still better results.

### SUMMARY OF THE INVENTION

Accordingly, in a first aspect the present invention provides a method of producing chocolate, the method comprising adding a chocolate emulsifying agent comprising at least 10% wt. of a hydroxy carboxylic acid ester of a diglyceride, to a chocolate mass, the hydroxy carboxylic acid not being tartaric acid. In a further aspect, the present invention provides a chocolate composition comprising a chocolate emulsifying agent comprising at least 10% wt. of a hydroxy carboxylic acid ester of a diglyceride, the hydroxy carboxylic acid not being tartaric acid. In particular, the hydroxy carboxylic acid ester of a diglyceride in the present invention is a citric acid ester of a diglyceride, preferably added to the chocolate mass before or during conching.

### DETAILED DESCRIPTION OF THE INVENTION

One object according to the present invention is to obtain a reduction and/or a control of the flow properties including the plastic viscosity and the yield value, which will imply a number of advantages. When using a hydroxy carboxylic acid ester of a diglyceride, such as a citric acid ester of a diglyceride, it is possible to reduce the total fat content in the chocolate and still keep flow properties known from chocolate containing high fat content. This ensures economic advantages by reducing the costs of cocoa butter, but also by reducing the fat energy percentage in the chocolate.

In addition to the above mentioned advantages, another object is to obtain process advantages owing to the fact that a reduction/adjustment of the viscosity and the yield value of the melted chocolate will make it far more easy to mould the chocolate in bars or figures. Also, the use of chocolate as couverture, enrobing fillings, nuts, etc may be easier.

Chocolate moulded, generally may be somewhat more viscous than coating chocolates since the chocolate may be vibrated into a mould over a longer period of time than allowed in enrobing.

Furthermore, the use of a hydroxy carboxylic acid ester of a diglyceride, such as a citric acid ester of a diglyceride, ensures homogeneity between the individual productions securing a uniform quality of the chocolate products.

Another advantage of the present invention may be the emulsifier's effect on the temper of the chocolate compared to other emulsifiers used in chocolate , i.e. the crystallization of the cocoa butter. The emulsifier of the present invention ensures easy formation of, and a high fraction of, the correct crystallization form of the cocoa fat, as this may be important for the texture and for the organoleptic qualities of high quality chocolates. Also, considerations must be made to the fact that the crystallized article will shrink in the moulds, which means that there is a need for easy release from the moulds.

Thus, the present invention relates to a method of producing chocolate, the method comprising adding a chocolate emulsifying agent comprising at least 10% wt. of a hydroxy carboxylic acid ester of a diglyceride to a chocolate mass, the hydroxy carboxylic acid not being tartaric acid.

In the present context, it should be understood that "chocolate" relates to what is traditionally regarded as "real chocolate" and so called "compounds", which are chocolate imitations. Thus, the term "chocolate" in the present context may comprise cocoa mass, cocoa fat and sugar. Cocoa fat accordingly should be interpreted as being selected from the group consisting of cocoa butter, cocoa butter substitute, cocoa butter equivalent, cocoa butter replacer, and any mixture thereof such as used in the application of vecao.

Additionally, the chocolate mass may comprise a milk additive. The chocolate mass may additionally comprise any other additive to alter the physical or chemical properties of the chocolate, such as non-fat cocoa solids, sugar substitutes, natural and artificial flavors (e.g., vanillin, spices, coffee, ethyl vanillin, salt, brown nut-meats, natural vanilla, etc., as well as mixtures of these), antioxidants (e.g., preservatives such as TBHQ, tocopherols and the like), proteins, and the like. It follows that "chocolate mass" is a mixture of the ingredients in "chocolate", and the two terms should be interpreted in the same way in the context of the present invention.

The process of making chocolate is reviewed in B. L. Zoumas and E. J. Finnegan, "Chocolate and Cocoa", Kirk-Othmer Encyclopedia of Chemical Technology, Vol. 6 (3rd Ed., Wiley-Interscience, New York) 1-19 (1985). Some of the considerations present in the production of chocolate are described below, though a person skilled in the art is aware of considerations not explicit mentioned in the text.

During the production of chocolate, the chocolate mass undergoes a mechanic conching process. The mechanical conching process takes place after the ingredients have been well mixed and the chocolate mass subsequently has been rolled. During conching, the chocolate mass obtains its physical properties and characteristic aroma. The crumbled chocolate mass is subjected to an intensive mixing ensuring that all dry particles are coated by fat, thus converting the chocolate mass to a liquid suspension with solid coated sugar particles, which gives the chocolate a good smooth texture when eaten. A mixing-kneading process allows moisture and volatile components to escape while smoothing the chocolate paste and is critical to the flavour and texture development of the chocolate.

Alternatively to the conching step, a liquefying step mixes refined flakes under high shear over a short period of time. The refined flakes are quickly converted to a suspension of solids in a continuous fat phase. The lack of flavour development can be corrected by pretreating the liquor and cocoa butter.

Additional fat and emulsifiers are then traditionally added in the standardizing or finishing step to adjust viscosity to final specifications.

The final step in obtaining the desired rheology of the chocolate is tempering, a process of inducing satisfactory crystal nucleation of the liquid fat in the chocolate. If the chocolate is improperly cooled, the resulting chocolate will have a grainy texture as well as poor color and appearance.

Finished chocolate is a suspension of very fine particles (usually less than 50 microns) in fat. The particles usually consist of cocoa solids and crystalline sucrose as well as milk solids in the case of milk chocolate. The cocoa solids in the chocolate liquor and the milk solids have normally been processed so that they are fine enough to be incorporated into a chocolate mixture. Sucrose, however, requires considerable size reduction since extra fine grade sucrose, for example, typically varies in crystal size from about 40 to 1000 microns. To fulfil the function as an ingredient in chocolate, therefore, these sucrose crystals should be reduced in size to less than about 50 microns.. It is known that at least about 50% of the surface area of particles in milk chocolate are produced by the presence of particles below two microns in size. The presence of these ultra fine particles increases viscosity and increasing amounts of fat, e.g., cocoa butter, are required to coat such particles in order for the chocolate to flow properly in manufacturing operations.

It is well known in the art that the amount of fat present in chocolate will affect the flow properties of the chocolate, i.e., the addition of fat to a chocolate decreases both the yield value and the plastic viscosity. Consequently, fat content may therefore be varied according to the intended use.

Chocolates contain a very large amount of small sugar particles. Fat does not cover the surface of the sugar particles very easily and consequently, anything which will form an interface between the sugar and fat will aid in the flow of the chocolate. Emulsifiers, may produce such an interface by coating the surface of the solid particles, in particular, the sugar. Thus, an emulsifying agent may be added to the chocolate mass.

In the present invention carbohydrate sweeteners, in the following termed sugars, with varying degrees of sweetness intensity are useful as additives in the preparation of chocolate and may be any of those typically used in the art. These sugars include, but are not limited to, sucrose, (e.g., from cane or beet), dextrose, fructose, lactose, maltose, glucose syrup solids, corn syrup solids, invert sugar, hydrolysed lactose, honey, maple sugar, brown sugar, molasses and the like. The nutritive carbohydrate sweetener, preferably sucrose, will be present in the chocolate as crystals or particles.

Particle size of ingredients is also known to influence the viscosity of chocolate. As a general rule, viscosity will increase with decreasing particle size. An excess of fine particles below 5 microns whether derived from the sugar, milk, or chocolate liquor/powder component, will make the chocolate extremely thick and difficult to manage during pumping, depositing, and enrobing operations. Coarse particles which exceed 60 microns will tend, however, to give the chocolate a gritty sandy texture which is unacceptable to consumers. Preferably, the particle size is around 20 microns, but in some applications it is suitable with particles in the range between 20 to 60 microns.

To ensure the right flow properties of the chocolate in the present invention, a chocolate emulsifying agent is added to the chocolate mass. The term "chocolate emulsifying agent" should be interpreted as an emulsifying agent applicable in chocolate, which is able to alter the flow properties of the chocolate mass and which is edible. An emulsifying agent in the following is abbreviated an emulsifier.

The emulsifier is preferably added during conching of the chocolate mass according to the present invention. Depending on the composition of the chocolate, the emulsifier may be added in the beginning of the conching. The emulsifier alternatively may be added in one or more doses while conching or it may be added in the end of the conching, for example if the viscosity of the chocolate mass should not be lowered too much. Alternatively, the emulsifier may be added to the chocolate mass before conching. This addition may have some advantages, for instance practical advantages.

Preferably, the emulsifier of the present invention is a hydroxy carboxylic acid ester of a diglyceride, the hydroxy carboxylic acid not being tartaric acid, more preferably the carboxylic acid is a hydroxy tricarboxylic acid ester of a diglyceride and most preferably the emulsifier is a citric acid ester of a diglyceride. Tartaric acid is not comprised in the group of hydroxy carboxylic acid ester of a diglyceride and for brevity, the following text does not disclaim tartaric acid, though it should be understood as such.

To ensure the right emulsion, the emulsifier preferably comprises at least 10% wt. of a hydroxy carboxylic acid ester of a diglyceride in the present invention. Alternatively, the emulsifier comprises at least 20% wt. of a hydroxy carboxylic acid ester of a diglyceride, such as at least 30% wt., 40% wt., 50% wt., 60% wt., 70% wt., 80% wt., 90% wt., or at least 95% wt.

In particular, the emulsifier comprises at least 11% wt., 12% wt., 13% wt., 14% wt., 15% wt., 16% wt., 17% wt., 18% wt., 19% wt. of a hydroxy carboxylic acid ester of a diglyceride, or at least 21% wt., 22% wt., 23% wt., 24% wt., 25% wt., 26% wt., 27% wt., 28% wt., 29% wt. of a hydroxy carboxylic acid ester of a diglyceride, or at least 31% wt., 32% wt., 33% wt., 34% wt., 35% wt., 36% wt., 37% wt., 38% wt., 39% wt. of a hydroxy carboxylic acid ester of a diglyceride, or at least 41% wt., 42% wt., 43% wt., 44% wt., 45% wt., 46% wt., 47% wt., 48% wt., 49% wt. of a hydroxy carboxylic acid ester of a diglyceride, or at least 51% wt., 52% wt., 53% wt., 54% wt., 55% wt., 56% wt., 57% wt., 58% wt., 59% wt. of a hydroxy carboxylic acid ester of a diglyceride, or at least 61% wt., 62% wt., 63% wt., 64% wt., 65% wt., 66% wt., 67% wt., 68% wt., 69% wt. of a hydroxy carboxylic acid ester of a diglyceride, or at least 71% wt., 72% wt., 73% wt., 74% wt., 75% wt., 76% wt., 77% wt., 78% wt., 79% wt. of a hydroxy carboxylic acid ester of a diglyceride, or at least 81% wt., 82% wt., 83% wt., 84% wt., 85% wt., 86% wt., 87% wt., 88% wt., 89% wt. of a hydroxy carboxylic acid ester of a diglyceride, or at least 91% wt., 92% wt., 93% wt., 94% wt., 95% wt., 96% wt., 97% wt., 98% wt., 99% wt. of a hydroxy carboxylic acid ester of a diglyceride.

In addition to the hydroxy carboxylic acid ester of a diglyceride, the emulsifier may comprise a further emulsifying agent. This further emulsifying agent is selected from the group consisting of a carboxylic acid ester of a monoglyceride, a carboxylic acid ester of a diglyceride, a phospholipid, a phospholipid derivative, a polyglycerol ester of polyricinolic acid, an ammonium phosphatide and any combination thereof. Phospholipids may preferably be lecithin.

In another embodiment this further emulsifying agent may be lecithins enriched in either phosphatidyl choline or phosphatidyl ethanolamine or both, mono- and diglycerides, diacetyl tartaric acid esters of mono- and diglycerides, monosodium phosphate derivatives of mono- and diglycerides of edible fats or oils, sorbitan monostearate, polyoxyethylene sorbitan monostearate, hydroxylated lecithin, lactylated fatty acid esters of glycerol and propylene glycol, polyglycerol esters of fatty acids, propylene glycol mono- and diester of fats. In addition, other emulsifiers that can be used in the present invention, include ammonium salts of phosphatidic acid, sucrose esters, oat extract, etc., any emulsifier found to be suitable in chocolate or similar fat/solid system or any blend provided the total amount of emulsifier does not exceed 1% by weight.

Thus, any combination between the hydroxy carboxylic acid ester of a diglyceride and a further emulsifying agent is comprised in the present invention. This combination may be between the hydroxy carboxylic acid ester of a diglyceride and one, two, or more of the further emulsifying agents. For example the combination may be a hydroxy carboxylic acid ester of a diglyceride and a further carboxylic acid ester of a monoglyceride. The selection of a suitable further emulsifying agent may depend on the required flow properties in the final chocolate product.

Accordingly, the further emulsifying agent may be added to the chocolate mass up to the missing amount of emulsifier. If e.g. the hydroxy carboxylic acid ester of a diglyceride is added in an amount of 10% wt., then the further emulsifying agent may be added in an amount of up to 90% wt. If a further emulsifying agent is added to the chocolate mass, the further emulsifying agent may comprise up to 90% wt. of the chocolate mass in any individual specified amount. On the other hand if the hydroxy carboxylic acid ester of a diglyceride is added in an amount of 20% wt., the further emulsifying agent may comprise up to 80% wt. of the added emulsifiers, etc.

Preferably, the further emulsifying agent in the present invention is a carboxylic acid ester of a monoglyceride. The carboxylic acid ester of a monoglyceride may preferably be a hydroxy carboxylic acid ester of a monoglyceride, and most preferably be a citric acid ester of a monoglyceride.

In a presently preferred embodiment, the chocolate emulsifying agent essentially consists of a carboxylic acid ester of a monoglyceride and a hydroxy carboxylic acid ester of a diglyceride. A presently more preferred embodiment of the invention is to add a citric acid ester of a diglyceride and as a further emulsifying agent add a citric acid ester of a monoglyceride.

Accordingly, in a useful embodiment the chocolate emulsifying agent essentially consists of a citric acid ester of a monoglyceride and a citric acid ester of a diglyceride. When using the term "essentially", it is understood in the art that the purity of the fractions may never be 100%. There may be contaminants or other residues in the fractions, such as triglycerides, free glycerols, etc.

In one presently preferred embodiment, when the chocolate essentially consists of a hydroxy carboxylic acid ester of a diglyceride and a further emulsifying agent, such as carboxylic acid ester of a monoglyceride, the hydroxy carboxylic acid ester of a diglyceride preferably is in the range of 30 to 90% wt., more preferably 40 to 90% wt., still more preferably 50 to 90% wt., still more preferably 50 to 80% wt., still more preferably 50 to 70% wt., most preferable 50 to 60% wt. such as around 50% wt.

Thus, the ratio between hydroxy carboxylic acid ester of a diglyceride and a further emulsifying agent, such as carboxylic acid ester of a monoglyceride, comprising the emulsifier is from 3:7 to 9: 1, more preferably from 4:6 to 9: 1, still more preferably from 1:1 to 9: 1, still more preferably from 1:1 to 8:2, still more preferably from 1:1 to 7:3, most preferable from 1:1 to 6:4, such as around 1:1. Disregarded in the ratios are contaminants, other residues in the fractions, or free fatty acids such as triglycerides, free glycerols, etc.

The emulsifier applied in the present invention may be derived from a natural occurring fatty acid or derivatives thereof. The naturally occurring fatty acids may be selected from the group consisting of rapeseed oil, castor oil, maize oil, cottonseed oil, olive oil, palm oil, safflower oil, sesame oil, soybean oil, sunflower oil, and any mixture thereof and any derivative thereof. Preferably, the fatty acid is rapeseed oil or a derivative thereof. It should though be understood that the fatty acids might be derived from other sources in the present invention.

In the presently most preferred embodiment, the emulsifier is derived from rapeseed oil or a derivative thereof.

The hydroxy carboxylic acid ester applied in the present invention preferably is derived from naturally occurring fatty acids with iodine values of at least 45. Alternatively, the iodine value of the fatty acids is at least 55, preferably around 55. Characteristic to the fatty acids is that the esterificating fatty acids preferably are saturated or unsaturated fatty acids with 14 to 18 carbon atoms, more preferably with 16-18 carbon atoms. As an option the esterificating fatty acids are saturated or unsaturated fatty acids with up to 22 carbon atoms, such as up to 20 carbon atoms. The hydroxy carboxylic acid ester of a diglyceride preferably has a saponification value of between 260 to 330, more preferably between 300-330. The hydoxy carboxylic acid ester of a diglyceride furthermore preferably has an acid value of between 10-80, more preferably between 50-70.

In order to produce a chocolate with acceptable flow properties, it is also essential to keep the moisture content low.

It is well known within the chocolate industry that moisture content has a significant effect on the flow properties of chocolate. If water is added to chocolate, a marked increase in viscosity occurs. It has been previously reported that both the yield value and plastic viscosity increase with moisture levels above 1.1%. Between 0.6-1.1% moisture, the plastic viscosity is nearly constant whereas the yield value rises with increasing moisture. This could be explained by the formation of layers of syrup on the surface of sugar particles with an increase in moisture, which increases the friction between the said particles.

The most preferred hydroxy carboxylic acid ester in the present invention, citric acid ester of a diglyceride, may be prepared by a reaction between citric acid and diglyceride. The ratio between the reactants, the reaction temperature and the reaction time is determining the degree of esterfication. Diglyceride traditionally is prepared by trans esterfication of triglycerides with glycerol, by the invention is though not limited to this reaction.

Heating the mixture of the prepared diglyceride and citric acid performs the esterification to give the citric acid ester of diglyceride. Diglyceride may be preheated before the addition of citric acid, and then the heating preferably is continued until reaction temperature is obtained. The temperature of the preheated diglyceride may generally be 80°C to 120°C and preferably 90°C to 110°C and more preferably 100°C. The reaction temperature may generally 100°C to 160°C and preferably 120°C 150°C and more preferably about 140°C. The reaction mixture is typically maintained at a pressure of 10 to about 760 mmHg and more preferably maintained at a pressure form about 20 to 200 mmHg and most preferably about 50 mmHg.

Prior to and/or during the reaction, the reaction mixture may advantageously be covered with an inert gas such as nitrogen. The water being released during the reaction may continuously be removed from the reaction mixture by evaporating and condensing the water vapour.

The weight ratio of citric acid to diglyceride in the reaction mixture broadly may range from 1:10 to about 1:2. Preferably the weight ratio is from 1:10 to about 1:4 and more preferably about 1:5.

Generally, the esterification reaction may be performed for about 1-20 hours and preferably 5-10 hours and more preferably 8-10 hours.

Conching for extended periods of time (longer than 4 hrs.) at elevated temperatures (above 100 DEG F.) is well known to be an effective method for removing water and offlavours from chocolate paste. The initial ingredients should be selected to have low moisture, and chocolate processing should be done so that moisture uptake from the atmosphere by hygroscopic ingredients is kept to a minimum.

The addition of chocolate emulsifying agents in the present invention is in the amount of between 0,2 to 1,0% wt. of the chocolate mass, more preferably between 0,4 to 0,8% wt., most preferably between 0,5 to 0,6% wt. The amount of added emulsifier depends for instance of the flow requirement of the chocolate mass.

The chocolates of the present invention may contain a trace of water. It is preferred that they contain less than 1% moisture, preferably less than 0.75% by weight, in order to meet the flow requirements. Higher moisture is very detrimental to the yield value and plastic viscosity.

Finally, the second aspect of the present invention is a chocolate composition comprising a chocolate emulsifying agent comprising at least 10% wt. of a hydroxy carboxylic acid ester of a diglyceride. The composition is provided by the present method according to the invention and thus all features and embodiments as described in the text above can be combined in all relevant ways with the second aspect of the invention.

### BRIEF DESCRIPTION OF THE DRAWINGS

Fig.1 is a comparison of functionality as Yield Value and Plastic Viscosity for citric acid esters with different monoglyceride percentage. The prepared citric acid esters are also compared with two commercial citric acid esters from the marked.
Fig.2 is a comparison of functionality as Yield Value and Plastic Viscosity for mixtures of citric acid ester of monoglyceride and citric acid ester of diglyceride.
Fig.3 is a comparison of functionality as Yield Value for different dosage of different citric acid esters.
Fig.4 is a comparison of functionality as Plastic Viscosity for different dosage of different citric acid esters.
Fig. 5 is a comparison of functionality as Yield Value and Plastic Viscosity for different citric acid esters in Compound.
Fig. 6 is a comparison of functionality as Yield Value and Plastic Viscosity for different citric acid esters made in pilot scale.

### EXAMPLES

A general procedure for determining the yield value and plastic viscosity in chocolate.

The functionality of the citric acid esters in chocolate was determined by measure of yield value and plastic viscosity. The measure was made on a Haake Viscometer RV1 by a rotor-cup system. The rotor was a Z38 DIN53018.

After the measure, the yield value and plastic viscosity were determined by the use of the rheology casson-model.

### Example 1: Citric acid esters with variation of the ratio of monoglyceride and diglyceride.

Glycerides in varying ratio of monoglyceride and diglyceride were charged to a reaction flask. The reaction flask was equipped with a mechanical stirrer, nitrogen inlet, vacuum capabilities to 1 mmHg, steam outlet, thermometer and temperature controlled heating mantel.

The glycerides were heated until 100°C with good agitation. Citric acid, 20% in weight, was added to the glyceride, and then the heating was continued until 140°C. After the addition of citric acid, the pressure in the reaction flask was gradually reduced to 50 mmHg. The reaction was continued for 5 hours. Then the reaction mixture was cooled to below 80°C before discharge.

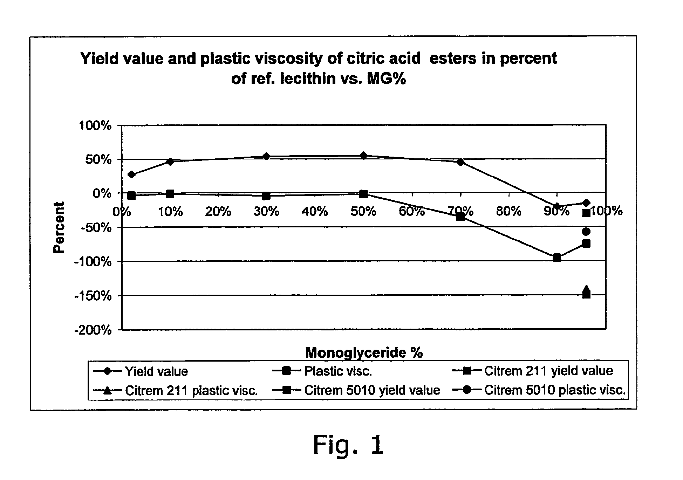

After the completion of the reaction, the resulting citric acid esters were analysed for functionality in a milk chocolate. The result of the analyses of functionality are summarised in the below table 1 and fig. 1. MG is the fraction of monoglyceride, and positive signs in last two columns mean a better result compared to the reference compound Lecithin.

In figure 1, a number of measurements of the plastic viscosity are stated in a 32% chocolate in which the ratio of monoglyceride and diglyceride is from 98/2 to 5/95. From the measurements it appears that the 98/2 diglyceride citric acid ester gives a much better, i.e. lower, plastic viscosity compared to the citric acid ester of monoglyceride, where the mono percentage at the distillation is exceeding 90%.

It is particularly interesting to observe the functionality (the efficiency) of different citric acid esters of mono- and diglycerides, when changing the proportion between the two glycerides that the efficiency of the emulsifiers increases with an optimum at approximately a 1:1 mixture of the two glycerides. When exceeding the 50% monoglyceride moiety content, the functionality of the esters rapidly decreases with increasing content of monoglyceride.

For diglycerides of a commercial purity of minimum 98% diglyceride and a maximum of 2% monoglyceride as an unavoidable contaminant, the corresponding citric acid ester derivative thus has shown to be surprisingly efficient reducing both viscosity and yield value in a chocolate mass. The reduction is in the order of between 0.5 to 1 time compared to traditionally applied emulsifiers, such as soy lecithin.

By way of comparison, some single values from tests with citric acid esters of monoglycerides are shown in the form of two commercial products: Citrem 211 and Citrem 5010. The same picture is observed at analogue tests of the citric acid esters, as stated above, but by choosing other types of chocolate, for example pure bitter, and rich in fat, and compounds. Obviously citric acid esters based on diglycerides or up to 50/50 mixtures with monoglycerides give a good reduction of both the plastic viscosity and of the yield value of chocolates and compounds. At a higher ratio of the including monoglyceride the efficiency decreases.

**Table 1:**

| MG | Sample YV (Pa) | Sample PV (Pa s) | Ref. Lecithin YV (Pa) | Ref. Lecithin PV (Pa s) | ΔYV | ΔPV |
|---|---|---|---|---|---|---|
| 2,0% | 14,0 | 5,1 | 19,4 | 5,0 | 27,8% | -3,5% |
| 10,0% | 10,4 | 5,0 | 19,4 | 5,0 | 46,4% | -1,1% |
| 30,0% | 8,9 | 5,2 | 19,4 | 5,0 | 53,9% | -4,4% |
| 50,0% | 8,8 | 5,0 | 19,4 | 5,0 | 54,8% | -1,9% |
| 70,0% | 10,6 | 6,7 | 19,4 | 5,0 | 45,3% | -35,1% |
| 90,0% | 23,3 | 9,7 | 19,4 | 5,0 | -20,5% | -95,5% |

| | | | | | | |
|---|---|---|---|---|---|---|
| YV = Yield Value PV = Plastic Viscosity ΔYV = (YVref-YVsample)/YVref ΔPV = (PVref-PVsample)/PVref | | | | | | |

### Example 2: Mixtures of a citric acid ester of a monoglyceride and a citric acid ester of a diglyceride, with variation of the ratio.

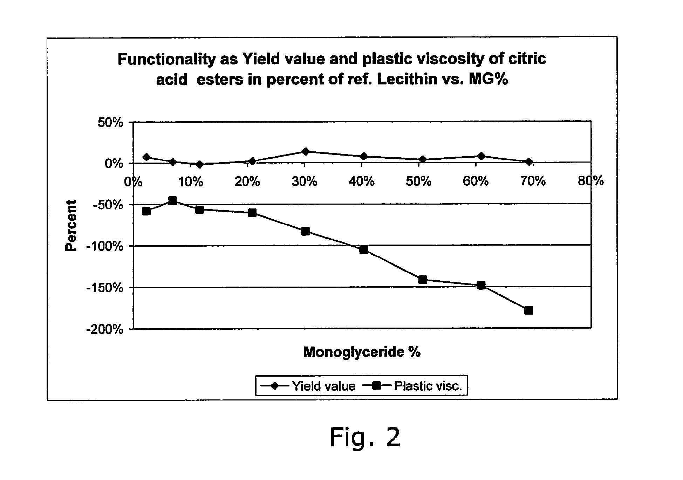

A citric acid ester of a monoglyceride (96%) and a citric acid ester of a diglyceride (97%) were made according to Example 1. From the two citric acid esters, mixtures with a varying ratio of monoglyceride and diglyceride were separately mixed in a reaction flask. The reaction flask was equipped with a mechanical stirrer, a nitrogen inlet, a thermometer and temperature controlled heating mantel. The mixtures were heated until 80°C, when good agitation. After 5 min. of agitation at 80°C, the mixtures were discharged. After the completion of the mixing, the resulting citric acid esters mixtures were analysed for functionality in a milk chocolate. The result of the analyses of functionality are summarised in the below table 2 and fig. 2. MG is the fraction of monoglyceride, and positive signs in last two columns mean a better result compared to the reference compound Lecithin.

**Table 2:**

| MG | Sample YV(Pa) | Sample PV (Pa s) | Ref. Lecithin YV(Pa) | Ref. Lecithin PV (Pa s) | ΔYV | ΔPV |
|---|---|---|---|---|---|---|
| 2,3% | 17,4 | 7,6 | 18,8 | 4,8 | 7,7% | -57,8% |
| 6,9% | 18,5 | 7,0 | 18,8 | 4,8 | 1,6% | -45,2% |
| 11,6% | 19,1 | 7,5 | 18,8 | 4,8 | -1,7% | -56,2% |
| 20,9% | 18,4 | 7,7 | 18,8 | 4,8 | 2,3% | -60,4% |
| 30,2% | 16, | 8,8 | 18,8 | 4,8 | 13,8% | -82,6% |
| 40,4% | 17,4 | 9,9 | 18,8 | 4,8 | 7,8% | -105,2% |
| 50,7% | 18,0 | 11,7 | 18,8 | 4,8 | 4,1% | -141,4% |
| 60,9% | 17,4 | 12,0 | 18,8 | 4,8 | 7,8% | -148,4% |
| 69,3% | 18,7 | 13,4 | 18,8 | 4,8 | 0,8% | -178,5% |

| | | | | | | |
|---|---|---|---|---|---|---|
| YV = Yield Value PV = Plastic Viscosity ΔYV = (YVref-YVsample)/YVref ΔPV = (PVref-PVsample)/PVref | | | | | | |

### Example 3: Functionality of citric acid esters, with different dosage, in chocolate.

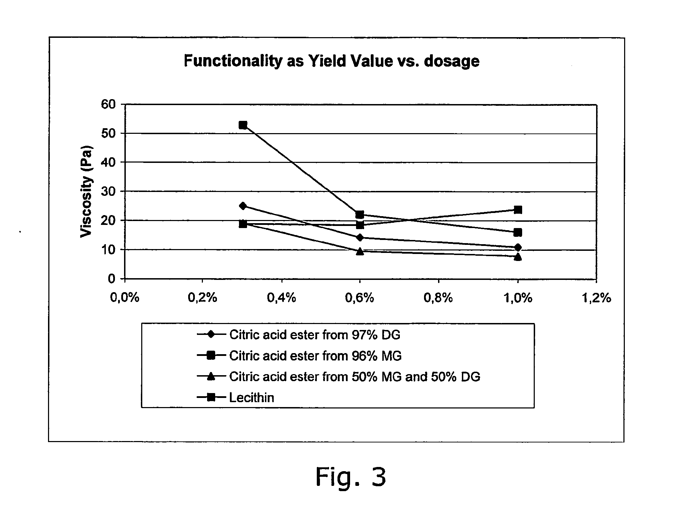

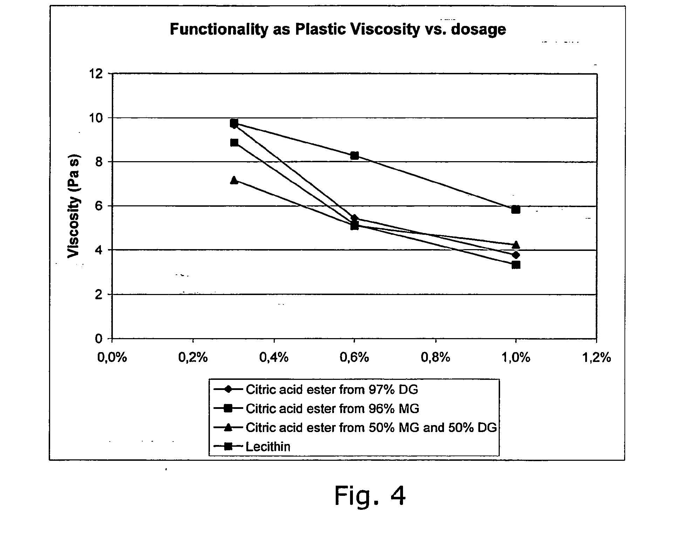

A citric acid ester of a monoglyceride (96%), a citric acid ester of a diglyceride (97%) and a citric acid ester of 50% monoglyceride and 50% diglyceride, were made according to Example 1. A typical commercial lecithin was used as the reference compound. Functionality of different dosage of the citric acid esters was determined in a milk chocolate, then compared with the reference compound. The result of the analyses of functionality is summarised in the below table 3 and figure 3-4. MG is the fraction of monoglyceride, DG is the fraction of diglyceride, and positive signs in last two columns mean a better result compared to the reference compound Lecithin.

In the present example it has been demonstrated that the esterification with the citric acid can be done on the pure components, i.e. diglyceride and monoglyceride. Esterification can also be done as prebelended mixtures of the two types of glycerides. No difference in the functionality of two corresponding formulations is observed. Thus, the diglycerides can e.g. be produced as a residue fraction (heavily boiling) from the distillation of the monoglycerides (light boiling). The monoglyceride citric acid ester can then be mixed in the required ratio to obtain the optimal point as to the functionality.

In a more rational way the esterification can also be done on the mono- and diglyceride, i.e. the equilibrium mixture being normally available as a raw material from which the monoglyceride is distilled. This considerably simplifies the process. Costly and complicated distillation of the monoglyceride is avoided, implying that one process step is eliminated before the esterification with the citric acid, a fact which renders the process more attractive on a economical point of view than it will be by using the solution with the distilled monoglyceride.

**Table 3:**

| Citric acid ester from | Dosage | Sample YV(Pa) | Sample PV(Pa s) | Ref. Lecithin YV (Pa) | Ref. Lecithin PV(Pa.s) | ΔYV | ΔPV |
|---|---|---|---|---|---|---|---|
| DG (97%) | 0,3% | 25,0 | 9,7 | 18,9 | 8,9 | -32,6% | -9,0% |
| | 0,6% | 14,3 | 5,4 | 18,5 | 5,2 | 23,0% | -5,5% |
| | 1,0% | 11,0 | 3,8 | 23,9 | 3,3 | 54,3% | -13,1% |
| MG (96%) | 0,3% | 52,9 | 9,8 | 18,9 | 8,9 | -180,3% | -10,0% |
| | 0,6% | 22,1 | 8,3 | 18,5 | 5,2 | -19,1% | -60,7% |
| | 1,0% | 16,1 | 5,8 | 23,9 | 3,3 | 32,9% | -74,6% |
| 50% MG and 50% DG | 0,3% | 19,0 | 7,2 | 18,9 | 8,9 | -0,8% | 19,2% |
| | 0,6% | 9,6 | 5,1 | 18,5 | 5,2 | 48,3% | 1,1% |
| | 1,0% | 7,9 | 4,2 | 23,9 | 3,3 | 67,2% | -26,9% |

| | | | | | | | |
|---|---|---|---|---|---|---|---|
| YV = Yield Value PV = Plastic Viscosity ΔYV = (YVref-YVsample)/YVref ΔPV = (PVref-PVsample)/PVref | | | | | | | |

### Example 4: Temper ability of milk chocolate, Lecithin versus citric-acid-ester

### Chocolate test system

A standard milk chocolate system is chosen as the chocolate model system to demonstrate in any of the tested emulsifiers is affecting the tempering application of chocolate. The total fat content is around 32% wt. fat, and the amount of whole milk powder is 23% wt. Particle size of the milk chocolate is max 25 micron. Since milk chocolate is the most difficult type of chocolate to temper, this is the system that is chosen. It is tested if it is possible to temper all milk chocolates (added different emulsifiers) to a practical and producible state and furthermore if some of the emulsifiers course changes in the temperature settings needed to obtain a well tempered chocolate.

### Equipment

Palsgaard is using a Aasted AK-10 pilot plant tempering machine to conduct the tempering process. For evaluation of the degree of temper a Exotherm 7400 is used. The cooling cell of the temper-meter is set at 8,0°C.

### Temper table comments

In order to understand the information given in table 4, some comments must follow. The column saying "State at temperature 21.5°/20.7°/29.5°C" is the start temperature for all the measurements. Slightly under tempered is better than under tempered (better meaning less influence at the cocoa butter crystallisation). The following information about inflexion at different temperatures it is desirable to get inflexion (cocoa butter crystal formation) at as high a temperature as possible. So the perfect outcome would be if all inflexions came at 22°C (or at higher temperatures).

### Conclusion

All the 4 emulsifier can be tempered at both 0,60 and at 1,0% without any serious difficulties, but of the four tested emulsifiers, the citric acid ester of diglyceride is found to be the easiest to temper. There is a general tendency in all the 4 tested emulsifiers and that is that they all are slightly easier to temper at 0,60% compared to 1,0% dosage. Also slightly colder water settings should be selected at the high emulsifier dosage in order to obtain good inflexion curves this is another indication of a beginning influence of the crystallisation of the chocolate fat phase.

Through measurements of the chocolate's temper the additive's effect on the crystallization conditions can be evaluated, as the object is to obtain a clear inflextion at 22°C or higher. Measurements of a chocolate's temper by adding of diglyceride citric acid ester to a chocolate have proved that the chocolate becomes only a little undertempered, whereas a clear undertempering is observed when using lecithin. At the same time it is found that a dosage of 0,6% of diglyceride citrate gives the best tempering.

**Table 4:**

| Emulsifier | State at temp. 21.5/20.7/2 9.5 | Numbers of ok inflexions at 19°C | Numbers of ok inflexions at 20°C | Numbers of ok inflexions at 21°C | Numbers of ok inflexions at 22°C | Total measure ments |
|---|---|---|---|---|---|---|
| Lecithin Sternp.N-10 0,60% | Under tempered | 1 | 2 | 4 | 1 | 8 |
| Lecithin Sternp. N-10 1.0% | Under tempered | 0 | 2 | 3 | 0 | 5 |
| Citric acid ester (DG) 0.60% | Slight under tempered | 0 | 2 | 6 | 1 | 9 |
| Citric acid ester (DG) 1.0% | Under tempered | 0 | 1 | 6 | 0 | 7 |
| Citric acid ester (MDG) 0.6% | Slight under tempered | 0 | 2 | 4 | 1 | 7 |
| Citric acid ester (MDG) 1.0% | Under tempered | 0 | 3 | 4 | 0 | 7 |
| Citric acid ester (MG) 0.60% | Slight under tempered | 0 | 2 | 4 | 1 | 7 |
| Citric acid ester (MG) 1.0% | Under tempered | 0 | 3 | 5 | 0 | 8 |

### Example 5: Functionality of citric acid esters in compound.

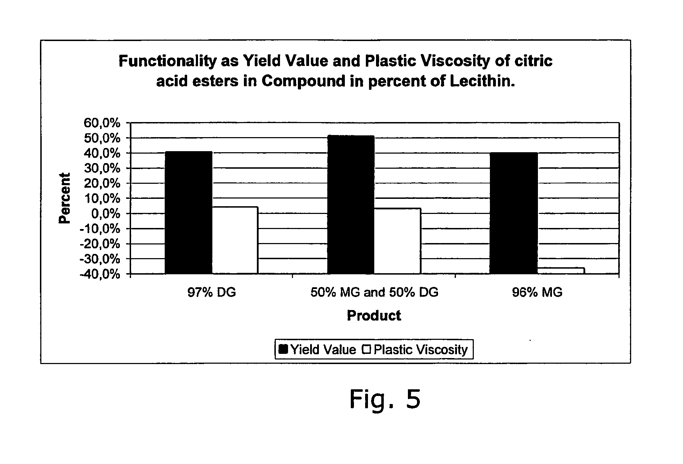

A citric acid ester of monoglyceride (96%), a citric acid ester of diglyceride (97%) and a citric acid ester of 50% monoglyceride and 50% diglyceride, were made according to Example 1. A typical commercial lecithin was used as the reference compound. Functionality with dosage at 0,6% of the citric acid esters was determined in a compound with Palm Olein as fat base. The fat percent was approx. 30. Lecithin was used as reference material. The result is summarised in the below table 5 and figure 5. Negative sign in the last two columns mean a bad result compared to the reference material Lecithin.

**Table 5:**

| Sample | Sample YV(Pa) | Sample PV (Pa s) | Ref. Lecithin YV(Pa) | Ref. Lecithin PV(Pa s) | ΔYV | ΔPV |
|---|---|---|---|---|---|---|
| 97% DG | 27,5 | 5,4 | 46,3 | 5,7 | 40,7% | 4,1% |
| 50% MG and 50% DG | 22,6 | 5,5 | 46,3 | 5,7 | 51,3% | 3,3% |
| 96% MG | 27,8 | 7,7 | 46,3 | 5,7 | 40,0% | -36,1% |

| | | | | | | |
|---|---|---|---|---|---|---|
| YV = Yield Value PV = Plastic Viscosity ΔYV = (YVref-YVsample)/YVref ΔPV = (PVref-PVsample)/PVref | | | | | | |

### Example 6: Citric acid esters of monodiglyceride in pilot scale.

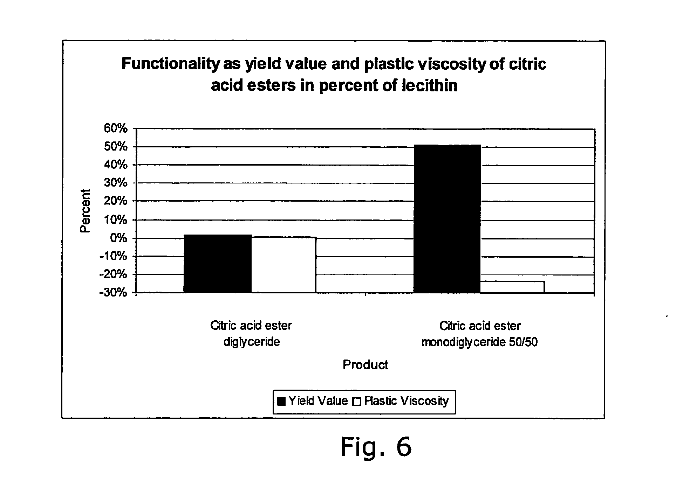

A monodiglyceride (40kg), with the composition of 43% monoglyceride, 42% diglyceride and 15% triglyceride, was charged to a reaction vessel. The reaction vessel was equipped with a mechanical stirrer, nitrogen Inlet, vacuum capabilities to 50 mbar, steam outlet, thermometer and temperature controlled heating system. The glyceride was heated until 100°C, under good agitation. Citric acid (10kg) was added to the glyceride, and then the heating was continued until 140°C. After the addition of citric acid, the pressure in the reaction flask was gradually reduced to 90 mbar. The reaction was continued for 12 hours. Then the reaction mixture was cooled to below 80°C before discharge. After the completion of the reaction, the resulting citric acid esters were analysed for functionality in a milk chocolate. The result of the analyses of functionality is summarised in the below table 6 and figure 6. Negative sign, in last two columns, means a bad result compared to the reference compound Lecithin.

### Example 7: Citric acid esters of diglyceride in pilot scale.

A diglyceride (42kg) with the composition of 4% monoglyceride 91% diglyceride and 5% triglyceride was charged to a reaction vessel. The reaction vessel was equipped with a mechanical stirrer, nitrogen inlet, vacuum capabilities to 50 mbar, steam outlet, thermometer and temperature controlled heating system. The glyceride was heated until 100°C, under good agitation. Citric acid (10,5kg) was added to the glyceride, and then the heating was continued until 140°C. After the addition of citric acid, the pressure in the reaction flask was gradually reduced to 90 mbar. The reaction was continued for 9 hours. Then the reaction mixture was cooled to below 80°C before discharge. After the completion of the reaction, the resulting citric acid esters were analysed for functionality in a milk chocolate. The result of the analyses of functionality is summarised in the below table 6 and figure 6. Negative sign, in last two columns, mean a bad result compared to the reference compound Lecithin.

**Table 6:**

| Product | Sample YV (pa) | Sample PV (Pa s) | Ref. Lecithin YV (Pa) | Ref. Lecithin PV (Pa s) | □YV | □PV |
|---|---|---|---|---|---|---|
| Citric acid ester diglyceride | 18,4 | 5,3 | 18,7 | 5,3 | 1,7% | 0,2% |
| Citric acid ester monodiglyceride 50/50 | 9,2 | 6,6 | 18,7 | 5,3 | 51,0% | -23,7% |

| | | | | | | |
|---|---|---|---|---|---|---|
| YV = Yield Value PV = Plastic Viscosity ΔYV = (YVref-YVsample)/YVref ΔPV = (PVref-PVsample)/PVref | | | | | | |

## Claims

1. A method of producing chocolate, the method comprising adding a chocolate emulsifying agent comprising at least 10% wt. of a hydroxy carboxylic acid ester of a diglyceride to a chocolate mass, the hydroxy carboxylic acid not being tartaric acid.

2. The method according to claim 1, wherein the hydroxy carboxylic acid ester of a diglyceride is a hydroxy tricarboxylic acid ester of a diglyceride.

3. The method according to any of claims 1 or 2, wherein the method furthermore comprises a step of conching or a liquefying step mixing refined flakes under high shear over a short periode of time.

4. The method according to any of the preceding claims, wherein the method furthermore comprises a step of tempering the chocolate mass.

5. The method according to any of the preceding claims, wherein the solids of the chocolate mass has a particle size in the range of 20-60 micron.

6. The method according to any of the preceding claims, wherein the chocolate emulsifying agent is flow regulating.

7. The method according to any of the preceding claims, wherein the hydroxy carboxylic acid ester of a diglyceride is added to the chocolate mass during conching of the chocolate mass.

8. The method according to any of the preceding claims, wherein the hydroxy carboxylic acid ester of a diglyceride is added to the chocolate mass before conching of the chocolate mass.

9. The method according to any of the preceding claims, wherein the hydroxy carboxylic acid is a hydroxy tricarboxylic acid.

10. The method according to claim 9, wherein the hydroxy tricarboxylic acid is citric acid.

11. The method according to any of the preceding claims, wherein the chocolate emulsifying agent comprises a further chocolate emulsifying agent.

12. The method according to claim 11, wherein the further emulsifying agent is selected from the group consisting of a carboxylic acid ester of a monoglyceride, a carboxylic acid ester of a diglyceride, a phospholipid, a phospholipid derivative, a polyglycerol ester of polyricinolic acid, an ammonium phosphatide and any combination thereof.

13. The method according to any of the preceding claims, wherein the chocolate emulsifying agent comprises at least 20% wt. of a hydroxy carboxylic acid ester of a diglyceride.

14. The method according to any of the preceding claims, wherein the chocolate emulsifying agent essentially consists of a carboxylic acid ester of a monoglyceride and a hydroxy carboxylic acid ester of a diglyceride.

15. The method according to any of the preceding claims, wherein the chocolate emulsifying agent comprises an amount of hydroxy carboxylic acid ester of a diglyceride which is in the range of 30 to 90% wt.

16. The method according to any of the preceding claims, wherein the hydroxy carboxylic acid ester of a diglyceride is derived from a natural occurring fatty acid or derivatives thereof.

17. The method according to claim 16, wherein the natural occurring fatty acid is selected from the group consisting of rapeseed oil, castor oil, maize oil, cottonseed oil, olive oil, palm oil, safflower oil, sesame oil, soybean oil, sunflower oil, and any mixture thereof and any derivative thereof.

18. The method according to claim 16, wherein the fatty acid is rapeseed oil or a derivative thereof.

19. The method according to any of the preceding claims, wherein the chocolate emulsifying agent is added in an amount of between 0.2 to 1.0% wt. of the chocolate mass.

20. The method according to any of the preceding claims, wherein the hydroxy carboxylic acid ester of a diglyceride has an iodine value of at least 55.

21. The method according to any of the preceding claims, wherein the hydroxy carboxylic acid ester of a diglyceride has a saponification value of between 300 to 330.

22. The method according to any of the preceding claims, wherein the hydroxy carboxylic acid ester of a diglyceride has an acid value of between 50-70.

23. A chocolate comprising a chocolate emulsifying agent comprising at least 10% wt. of a hydroxy carboxylic acid ester of a diglyceride, the hydroxy carboxylic acid not being tartaric acid.

24. The chocolate according to claim 23, wherein the hydroxy carboxylic acid ester of a diglyceride is a hydroxy tricarboxylic acid ester of a diglyceride.

25. The chocolate according to any of claims 23 or 24, wherein the chocolate is prepared by a method of producing a chocolate comprises a step of conching or liquefying step mixing refined flakes under high shear over a short periode of time.

26. The chocolate according to any of the claims 23-25, wherein the chocolate is prepared by a method of producing a chocolate comprises a step of tempering the chocolate.

27. The chocolate according to any of the claims 23-26, wherein the solids of the chocolate mass has a particle size in the range of 20-60 micron.

28. The chocolate according to claim 23, wherein the hydroxy carboxylic acid is a hydroxy tricarboxylic acid.

29. The chocolate according to claim 28, wherein the hydroxy tricarboxylic acid is citric acid.

30. The chocolate according to any of claims 23-29, wherein the chocolate emulsifying agent comprises a further emulsifying agent.

31. The chocolate according to claim 30, wherein the further emulsifying agent is selected from the group consisting of a carboxylic acid ester of a monoglyceride, a carboxylic acid ester of a diglyceride, a phospholipid, a phospholipid derivative, a polyglycerol ester of polyricinolic acid, an ammonium phosphatide and any combination thereof.

32. The chocolate according to any of claims 23-31, wherein the chocolate emulsifying agent comprises at least 20% wt. of a hydroxy carboxylic acid ester of a diglyceride.

33. The chocolate according to any of claims 23-32, wherein the chocolate emulsifying agent essentially consists of a carboxylic acid ester of a monoglyceride and a hydroxy carboxylic acid ester of a diglyceride.

34. The chocolate according to claim 33, wherein the chocolate emulsifying agent comprises an amount of hydroxy carboxylic acid ester of a diglyceride which is in the range of 30 to 90% wt.

35. The chocolate according to any of claims 23-34, wherein the hydroxy carboxylic acid ester of the diglyceride is derived from a natural occurring fatty acid or derivatives thereof.

36. The chocolate according to claim 35, wherein the natural occurring fatty acid is selected from the group consisting of rapeseed oil, castor oil, maize oil, cottonseed oil, olive oil, palm oil, safflower oil, sesame oil, soybean oil, sunflower oil, and any mixture thereof and any derivative thereof.

37. The chocolate according to claim 35, wherein the fatty acid is rapeseed oil or a derivative thereof.

38. The chocolate according to any of claims 23-37, wherein the chocolate substantially consists of cocoa mass, cocoa fat and sugar.

39. The chocolate according to claim 38 further comprising a milk additive.

40. The chocolate according to any of claims 38-39, wherein the cocoa fat is selected from the group consisting of cocoa butter, cocoa butter substitute, cocoa butter equivalent, cocoa butter replacer and any mixture thereof.

41. The chocolate according to any of claims 23-40, wherein the emulsifying agent constitutes between 0.2 to 1.0% wt. of the chocolate mass.

## Patentansprüche

1. Verfahren zur Herstellung von Schokolade, umfassend, dass einer Schokoladenmasse ein Schokoladenemulgator, umfassend mindestens 10 Gew.-% eines Hydroxycarbonsäureesters eines Diglycerids, hinzugegeben wird, wobei die Hydroxycarbonsäure keine Weinsäure ist.

2. Verfahren nach Anspruch 1, worin der Hydroxycarbonsäureester eines Diglycerids ein Hydroxytricarbonsäureester eines Diglycerids ist.

3. Verfahren nach irgendeinem der Ansprüche 1 oder 2, worin das Verfahren ferner einen Conchierschritt oder einen Verschmelzungsschritt umfasst, wobei raffinierte Flocken bei hoher Scherung über eine kurze Zeitspanne gemischt werden.

4. Verfahren nach irgendeinem der vorhergehenden Ansprüche, worin das Verfahren ferner einen Temperierungsschritt der Schokoladenmasse umfasst.

5. Verfahren nach irgendeinem der vorhergehenden Ansprüche, worin die Feststoffe der Schokoladenmasse eine Partikelgröße im Bereich von 20-60 Mikrometern aufweisen.

6. Verfahren nach irgendeinem der vorhergehenden Ansprüche, worin der Schokoladenemulgator flussregulierend ist.

7. Verfahren nach irgendeinem der vorhergehenden Ansprüche, worin während des Conchierens der Schokoladenmasse der Hydroxycarbonsäureester eines Diglycerids hinzugegeben wird.

8. Verfahren nach irgendeinem der vorhergehenden Ansprüche, worin vor dem Conchieren der Schokoladenmasse der Hydroxycarbonsäureester eines Diglycerids hinzugegeben wird.

9. Verfahren nach irgendeinem der vorhergehenden Ansprüche, worin die Hydroxycarbonsäure eine Hydroxytricarbonsäure ist.

10. Verfahren nach Anspruch 9, worin die Hydroxytricarbonsäure Zitronensäure ist.

11. Verfahren nach irgendeinem der vorhergehenden Ansprüche, worin der Schokoladenemulgator einen weiteren Schokoladenemulgator umfasst.

12. Verfahren nach Anspruch 11, worin der weitere Emulgator ausgewählt ist aus der Gruppe bestehend aus einem Carbonsäureester eines Monoglycerids, einem Carbonsäureester eines Diglycerids, einem Phospholipid, einem Phospholipidderivat, einem Polyglycerolester von Polyricinolsäure, einem Ammoniumphosphatid und irgendeiner Kombination davon.

13. Verfahren nach irgendeinem der vorhergehenden Ansprüche, worin der Schokoladenemulgator mindestens 20 Gew.-% eines Hydroxycarbonsäureesters eines Diglycerids umfasst.

14. Verfahren nach irgendeinem der vorhergehenden Ansprüche, worin der Schokoladenemulgator im Wesentlichen aus einem Carbonsäureester eines Monoglycerids und einem Hydroxycarbonsäureester eines Diglycerids besteht.

15. Verfahren nach irgendeinem der vorhergehenden Ansprüche, worin der Schokoladenemulgator eine Menge von Hydroxycarbonsäureestern eines Diglycerids im Bereich von 30 bis 90 Gew.-% umfasst.

16. Verfahren nach irgendeinem der vorhergehenden Ansprüche, worin der Hydroxycarbonsäureester eines Diglycerids aus einer natürlich vorkommenden Fettsäure oder Derivaten davon abgeleitet ist.

17. Verfahren nach Anspruch 16, worin die natürlich vorkommende Fettsäure ausgewählt wird aus der Gruppe bestehend aus Rapsöl, Rizinusöl, Maisöl, Baumwollsaatöl, Olivenöl, Palmöl, Distelöl, Sesamöl, Sojaöl, Sonnenblumenöl sowie irgendwelchen Mischungen und Derivaten davon.

18. Verfahren nach Anspruch 16, worin die Fettsäure Rapsöl oder ein Derivat davon ist.

19. Verfahren nach irgendeinem der vorhergehenden Ansprüche, worin der Schokoladenemulgator in einer Menge von zwischen 0,2 und 1,0 Gew.-% der Schokoladenmasse hinzugefügt wird.

20. Verfahren nach irgendeinem der vorhergehenden Ansprüche, worin der Hydroxycarbonsäureester eines Diglycerids einen Iodwert von mindestens 55 aufweist.

21. Verfahren nach irgendeinem der vorhergehenden Ansprüche, worin der Hydroxycarbonsäureester eines Diglycerids eine Verseifungswert von zwischen 300 und 330 aufweist.

22. Verfahren nach irgendeinem der vorhergehenden Ansprüche, worin der Hydroxycarbonsäureester eines Diglycerids einen Säurewert von zwischen 50 und 70 aufweist.

23. Schokolade, umfassend einen Schokoladenemulgator, der mindestens 10 Gew.-% eines Hydroxycarbonsäureesters eines Diglycerids umfasst, wobei die Hydroxycarbonsäure keine Weinsäure ist.

24. Schokolade nach Anspruch 23, worin der Hydroxycarbonsäureester eines Diglycerids ein Hydroxytricarbonsäureester eines Diglycerids ist.

25. Schokolade nach irgendeinem der Ansprüche 23 oder 24, worin die Schokolade anhand eines Schokoladenherstellungsverfahrens zubereitet wird, das einen Conchierschritt oder einen Verschmelzungsschritt umfasst, wobei raffinierte Flocken bei hoher Scherung während einer kurzen Zeitspanne gemischt werden.

26. Schokolade nach irgendeinem der Ansprüche 23-25, worin die Schokolade anhand eines Schokoladenherstellungsverfahrens zubereitet wird, das einen Temperierungsschritt der Schokolade umfasst.

27. Schokolade nach irgendeinem der Ansprüche 23-26, worin die Feststoffe der Schokoladenmasse eine Partikelgröße im Bereich von 20-60 Mikrometern aufweisen.

28. Schokolade nach Anspruch 23, worin die Hydroxycarbonsäure eine Hydroxytricarbonsäure ist.

29. Schokolade nach Anspruch 28, worin die Hydroxytricarbonsäure Zitronensäure ist.

30. Schokolade nach irgendeinem der Ansprüche 23-29, worin der Schokoladenemulgator einen weiteren Emulgator umfasst.

31. Schokolade nach Anspruch 30, worin der weitere Emulgator ausgewählt ist aus der Gruppe bestehend aus einem Carbonsäureester eines Monoglycerids, einem Carbonsäureester eines Diglycerids, einem Phospholipid, einem Phospholipidderivat, einem Polyglycerolester von Polyricinolsäure, einem Ammoniumphosphatid und irgendeiner Kombination davon.

32. Schokolade nach irgendeinem der Ansprüche 23-31, worin der Schokoladenemulgator mindestens 20 Gew.-% eines Hydroxycarbonsäureesters eines Diglycerids umfasst.

33. Schokolade nach irgendeinem der Ansprüche 23-32, worin der Schokoladenemulgator im Wesentlichen aus einem Carbonsäureester eines Monoglycerids und einem Hydroxycarbonsäureester eines Diglycerids besteht.

34. Schokolade nach Anspruch 33, worin der Schokoladenemulgator eine Menge von Hydroxycarbonsäureester eines Diglycerids im Bereich von 30 bis 90 Gew.-% umfasst.

35. Schokolade nach irgendeinem der Ansprüche 23-34, worin der Hydroxycarbonsäureester des Diglycerids aus einer natürlich vorkommenden Fettsäure oder Derivaten davon abgeleitet ist.

36. Schokolade nach Anspruch 35, worin die natürlich vorkommende Fettsäure ausgewählt ist aus der Gruppe bestehend aus Rapsöl, Rizinusöl, Maisöl, Baumwollsaatöl, Olivenöl, Palmöl, Distelöl, Sesamöl, Sojaöl, Sonnenblumenöl sowie irgendwelchen Mischungen und irgendwelchen Derivaten davon.

37. Schokolade nach Anspruch 35, worin die Fettsäure Rapsöl oder ein Derivat davon ist.

38. Schokolade nach irgendeinem der Ansprüche 23-37, worin die Schokolade im Wesentlichen aus Kakaomasse, Kakaofett und Zucker besteht.

39. Schokolade nach Anspruch 38, die ferner einen Milchzusatz umfasst.

40. Schokolade nach irgendwelchen der Ansprüche 38-39, worin das Kakaofett ausgewählt ist aus der Gruppe bestehend aus Kakaobutter, Kakaobutterersatz, Kakaobutteräquivalent, Kakaobutteraustauschmittel sowie irgendwelchen Mischungen davon.

41. Schokolade nach irgendeinem der Ansprüche 23-40, worin der Emulgator zwischen 0,2 und 1,0 Gew.-% der Schokoladenmasse ausmacht.

## Revendications

1. Procédé de fabrication de chocolat consistant à ajouter à une pâte à chocolat un émulsifiant pour chocolat contenant au moins 10% en poids d'un ester d'acide hydroxycarboxylique d'un diglycéride, ledit acide hydroxycarboxylique n'étant pas de l'acide tartrique.

2. Procédé selon la revendication 1, dans lequel l'ester d'acide hydroxycarboxylique d'un diglycéride est un ester d'acide hydroxytricarboxylique d'un diglycéride.

3. Procédé selon la revendication 1 ou 2, dans lequel le procédé comporte également une étape de conchage ou une étape de liquéfaction durant laquelle des flocons raffinés sont mélangés avec une force d'entraînement importante sur une brève période de temps.

4. Procédé selon l'une quelconque des revendications précédentes, dans lequel le procédé comporte également une étape de tempérage de la pâte à chocolat.

5. Procédé selon l'une quelconque des revendications précédentes, dans lequel le diamètre des particules de matière sèche de la pâte à chocolat est compris entre 20 et 60 microns.

6. Procédé selon l'une quelconque des revendications précédentes, dans lequel l'émulsifiant pour chocolat régule le fluage.

7. Procédé selon l'une quelconque des revendications précédentes, dans lequel l'ester d'acide hydroxycarboxylique d'un diglycéride est ajouté à la pâte à chocolat pendant le conchage de celle-ci.

8. Procédé selon l'une quelconque des revendications précédentes, dans lequel l'ester d'acide hydroxycarboxylique d'un diglycéride est ajouté à la pâte à chocolat avant le conchage de celle-ci.

9. Procédé selon l'une quelconque des revendications précédentes, dans lequel l'acide hydroxycarboxylique est un acide hydroxytricarboxylique.

10. Procédé selon la revendication 9, dans lequel l'acide hydroxytricarboxylique est de l'acide citrique.

11. Procédé selon l'une quelconque des revendications précédentes, dans lequel l'émulsifiant pour chocolat contient un émulsifiant supplémentaire.

12. Procédé selon la revendication 11, dans lequel l'émulsifiant supplémentaire est choisi parmi le groupe suivant : un ester d'acide carboxylique d'un monoglycéride, un ester d'acide carboxylique d'un diglycéride, un phospholipide, un dérivé d'un phospholipide, un polyricinoléate de polyglycérol, un phosphatide d'ammonium ou toute combinaison de ceux-ci.

13. Procédé selon l'une quelconque des revendications précédentes, dans lequel l'émulsifiant pour chocolat contient au moins 20% en poids d'un ester d'acide hydroxycarboxylique d'un diglycéride.

14. Procédé selon l'une quelconque des revendications précédentes, dans lequel l'émulsifiant pour chocolat est essentiellement composé d'un ester d'acide carboxylique d'un monoglycéride et d'un ester d'acide hydroxycarboxylique d'un diglycéride.

15. Procédé selon l'une quelconque des revendications précédentes, dans lequel l'émulsifiant pour chocolat contient une quantité d'ester d'acide hydroxycarboxylique d'un diglycéride comprise entre 30 et 90% en poids.

16. Procédé selon l'une quelconque des revendications précédentes, dans lequel l'ester d'acide hydroxycarboxylique d'un diglycéride est dérivé d'un acide gras naturel ou de dérivés de celui-ci.

17. Procédé selon la revendication 16, dans lequel l'acide gras naturel est choisi parmi le groupe suivant : huile de colza, huile de ricin, huile de maïs, huile de coton, huile d'olive, huile de palme, huile de carthame, huile de sésame, huile de soja, huile de tournesol et tout mélange ou dérivé de celles-ci.

18. Procédé selon la revendication 16, dans lequel l'acide gras est de l'huile de colza ou un dérivé de celle-ci.

19. Procédé selon l'une quelconque des revendications précédentes, dans lequel la proportion d'émulsifiant pour chocolat est comprise entre 0,2 et 1,0% en poids de la pâte à chocolat.

20. Procédé selon l'une quelconque des revendications précédentes, dans lequel l'ester d'acide hydroxycarboxylique d'un diglycéride possède un indice d'iode au moins égal à 55.

21. Procédé selon l'une quelconque des revendications précédentes, dans lequel l'ester d'acide hydroxycarboxylique d'un diglycéride possède un indice de saponification compris entre 300 et 330.

22. Procédé selon l'une quelconque des revendications précédentes, dans lequel l'ester d'acide hydroxycarboxylique d'un diglycéride possède un indice d'acide compris entre 50 et 70.

23. Chocolat contenant un émulsifiant pour chocolat contenant au moins 10% en poids d'un ester d'acide hydroxycarboxylique d'un diglycéride, ledit acide hydroxycarboxylique n'étant pas de l'acide tartrique.

24. Chocolat selon la revendication 23, dans lequel l'ester d'acide hydroxycarboxylique d'un diglycéride est un ester d'acide hydroxytricarboxylique d'un diglycéride.

25. Chocolat selon l'une quelconque des revendications 23 ou 24, dans lequel le chocolat est préparé selon une méthode comportant une étape de conchage ou une étape de liquéfaction durant laquelle des flocons raffinés sont mélangés avec une force d'entraînement importante sur une brève période de temps.

26. Chocolat selon l'une quelconque des revendications 23 à 25, dans lequel le chocolat est préparé selon une méthode comportant une étape de tempérage du chocolat.

27. Chocolat selon l'une quelconque des revendications 23 à 26, dans lequel le diamètre des particules de matière sèche de la pâte à chocolat se situe entre 20 et 60 microns.

28. Chocolat selon la revendication 23, dans lequel l'acide hydroxycarboxylique est un acide hydroxytricarboxylique.

29. Chocolat selon la revendication 28, dans lequel l'acide hydroxytricarboxylique est de l'acide citrique.

30. Chocolat selon l'une quelconque des revendications 23 à 29, dans lequel l'émulsifiant pour chocolat contient un émulsifiant supplémentaire.

31. Chocolat selon la revendication 30, dans lequel l'émulsifiant supplémentaire est choisi parmi le groupe suivant : un ester d'acide carboxylique d'un monoglycéride, un ester d'acide carboxylique d'un diglycéride, un phospholipide, un dérivé d'un phospholipide, un polyricinoléate de polyglycérol, un phosphatide d'ammonium ou toute combinaison de ceux-ci.

32. Chocolat selon l'une quelconque des revendications 23 à 31, dans lequel l'émulsifiant pour chocolat contient au moins 20% en poids d'un ester d'acide hydroxycarboxylique d'un diglycéride.

33. Chocolat selon l'une quelconque des revendications 23 à 32, dans lequel l'émulsifiant pour chocolat est essentiellement composé d'un ester d'acide carboxylique d'un monoglycéride et d'un ester d'acide hydroxycarboxylique d'un diglycéride.

34. Chocolat selon la revendication 33, dans lequel l'émulsifiant pour chocolat contient une quantité d'ester d'acide hydroxycarboxylique d'un diglycéride comprise entre 30 et 90% en poids.

35. Chocolat selon l'une quelconque des revendications 23 à 34, dans lequel l'ester d'acide hydroxycarboxylique d'un diglycéride est dérivé d'un acide gras naturel ou de dérivés de celui-ci.

36. Chocolat selon la revendication 35, dans lequel l'acide gras naturel est choisi parmi le groupe suivant : huile de colza, huile de ricin, huile de maïs, huile de coton, huile d'olive, huile de palme, huile de carthame, huile de sésame, huile de soja, huile de tournesol et tout mélange ou dérivé de celles-ci.

37. Chocolat selon la revendication 35, dans lequel l'acide gras est de l'huile de colza ou un dérivé de celle-ci.

38. Chocolat selon l'une quelconque des revendications 23 à 37, dans lequel le chocolat est essentiellement composé de pâte de cacao, de graisse de cacao et de sucre.

39. Chocolat selon la revendication 38 contenant également un additif à base de lait.

40. Chocolat selon l'une quelconque des revendications 38 à 39, dans lequel la graisse de cacao est choisie parmi le groupe suivant : beurre de cacao, substitut du beurre de cacao, équivalent du beurre de cacao, succédané du beurre de cacao ou tout mélange de ceux-ci.

41. Chocolat selon l'une quelconque des revendications 23 à 40, dans lequel la proportion d'émulsifiant est comprise entre 0,2 et 1,0% en poids de la pâte à chocolat.
